# EUROPEAN PATENT APPLICATION

(11) **EP 4 752 701 A1**
(43) Date of publication of application: **03.06.2026**
(21) Application number: 24884112.4
(22) Date of filing: 12.08.2024
(51) Int. Cl.: G06F 3/04845

(54) **WALLPAPER SETTING METHOD, AND TERMINAL DEVICE AND STORAGE MEDIUM**

(30) Priority: 03.11.2023 CN 202311463356; 11.12.2023 CN 202311702858
(71) Applicant: Honor Device Co., Ltd., Shenzhen, Guangdong 518040 (CN)
(72) Inventor: CHEN, Zhuoran, Shenzhen, Guangdong 518040 (CN); ZHANG, Taolin, Shenzhen, Guangdong 518040 (CN); GU, Pingping, Shenzhen, Guangdong 518040 (CN)
(74) Representative: Goddar, Heinz J.
(86) International application number: PCT/CN2024/111536
(87) International publication number: WO 2025/092105

(57) **Abstract**

Embodiments of this application provide a wallpaper setting method, a terminal device, and a storage medium, and relate to the field of terminal devices. The method includes: displaying and including a wallpaper preview interface in response to a tap operation on a wallpaper synthesis control; displaying a first option and a second option in response to a tap operation on a wallpaper selection control; determining a first image in response to a selection operation on the first option; obtaining a target subject image by performing subject extraction on the first image, and displaying the target subject image on the wallpaper preview interface; determining a second image in response to a selection operation on the second option; determining a superimposition region in the second image based on the target subject image; generating a target image based on the target subject image and the superimposition region, and displaying the target image; and setting the target image as a wallpaper in response to a tap operation on a wallpaper application control. In embodiments of this application, in a process of generating the wallpaper, a quantity of times of human computer interaction is increased, and user participation is increased.

## Description

This application claims priorities to Chinese Patent Application No. 202311463356.4, filed with the China National Intellectual Property Administration on November 3, 2023 and entitled "WALLPAPER GENERATION METHOD BASED ON PHOTO SUPERIMPOSITION", and to Chinese Patent Application No. 202311702858.8, filed with the China National Intellectual Property Administration on December 11, 2023 and entitled "WALLPAPER SETTING METHOD, TERMINAL DEVICE, AND STORAGE MEDIUM", both of which are incorporated by reference in their entireties.

### TECHNICAL FIELD

This application relates to the field of terminal devices, and in particular, to a wallpaper setting method, a terminal device, and a storage medium.

### BACKGROUND

With development of electronic technologies, terminal devices such as smart phones and tablet computers are more widely used and become a part of people's work and life, and users have higher requirements on functions and aesthetics of the terminal devices. Using a mobile phone as an example, in addition to functions such as calling, watching videos, and shopping, the mobile phone further has many functions that can improve aesthetics and human computer interaction, and a wallpaper is one of the functions. The wallpaper is an important carrier for presenting an overall visual style of a terminal product.

When setting the wallpaper, a user may usually select a picture as the wallpaper of the mobile phone. In a related technology, a wallpaper setting manner is monotonous, and human computer interaction in a wallpaper generation process is not rich enough. Consequently, a sense of user participation is poor, and personalized settings of the user for the wallpaper cannot be satisfied.

### SUMMARY

Embodiments of this application disclose a wallpaper setting method, a terminal device, and a storage medium, to resolve technical problems that a wallpaper setting manner is monotonous and human computer interaction in a wallpaper generation process is not rich enough, resulting in a poor sense of user participation.

A first aspect of this application discloses a wallpaper setting method, applied to a terminal device. The method includes: displaying a wallpaper preview interface on the display screen in response to a tap operation on a wallpaper synthesis control, the wallpaper preview interface including a wallpaper selection control and a wallpaper application control; displaying a first option and a second option in response to a received tap operation on the wallpaper selection control; determining a first image in response to a received selection operation on the first option; obtaining a target subject image by performing subject extraction on the first image, and displaying the target subject image on the wallpaper preview interface; determining a second image in response to a received selection operation on the second option; determining a superimposition region in the second image based on the target subject image, a size of the superimposition region being the same as a size of the target subject image; generating a target image based on the target subject image and the superimposition region, and displaying the target image; and setting the target image as a wallpaper of the terminal device in response to a received tap operation on the wallpaper application control, and displaying the wallpaper. According to the foregoing method, the first image and the second image may be determined based on selection of a user. In a wallpaper generation process, a quantity of times of human computer interaction is increased, and a sense of user participation is increased. In addition, the superimposition region is determined in the second image based on the target subject image of the first image, and the size of the superimposition region is the same as the size of the target subject image, so that the target subject image can be perfectly superimposed on the superimposition region, thereby presenting a better superimposition effect, and obtaining a more aesthetic wallpaper.

In some optional implementations, after the determining a first image in response to a received selection operation on the first option, the method includes: determining at least one superimposition recommendation image based on the first image, and updating the second option based on the at least one superimposition recommendation image. According to the foregoing method, the displayed second option can better match the first option selected by the user, helping the user select a target superimposition image that has a good matching effect with the target subject image.

In some optional implementations, the determining at least one superimposition recommendation image based on the first image includes: performing retrieval in a first gallery based on a main color of the first image, and determining a picture in the first gallery that matches the main color as the superimposition recommendation image. According to the foregoing method, the superimposition recommendation image matching the selected first option is determined by using a main color matching rule, so that the determined superimposition recommendation image matches the selected first option in color, thereby enabling the user to more conveniently select a target superimposition image more matching a color of a selected recommended subject image.

In some optional implementations, the determining at least one superimposition recommendation image based on the first image further includes: performing retrieval in a second gallery based on photographing information of the first image, and determining a picture in the second gallery that matches the photographing information as the superimposition recommendation image. According to the foregoing method, the superimposition recommendation image matching the selected first option is determined by using an information matching rule, so that the determined superimposition recommendation image matches the selected first option in terms of photographing information, thereby enabling the user to more conveniently select a target superimposition image that matches, in the photographing information, the selected recommended subject image.

In some optional implementations, the generating a target image based on the target subject image and the superimposition region includes: determining a third image; and generating the target image based on the target subject image, the superimposition region, and the third image. According to the foregoing method, content in the target image can be enriched by superimposing the third image, so that the generated target image is more aesthetic.

In some optional implementations, the determining a third image includes: determining at least one background color based on the main color of the first image, and displaying a background color option corresponding to each of the at least one background color; and generating, in response to a selection operation on any background color option, the third image based on a background color corresponding to any background color option. According to the foregoing method, the generated third image may match the main color of the first image in color, thereby improving aesthetics of a generated wallpaper.

In some optional implementations, after the generating the target image based on the target subject image, the superimposition region, and the third image, the method further includes: determining, according to a preset adjustment rule, a first region corresponding to the target image; adjusting the target subject image if the terminal device receives a first operation on the first region, to obtain an adjusted target subject image; adjusting the superimposition region based on the adjusted target subject image, to obtain an adjusted superimposition region; and updating the target image based on the adjusted target subject image, the adjusted superimposition region, and the third image. According to the foregoing method, a display situation of the target subject image on the target image may be adjusted based on the first operation performed by the user on the first region.

In some optional implementations, the first operation is one of or a combination of more of the following operations: a zoom-in operation, a zoom-out operation, and a movement operation. According to the foregoing method, a display position or a display size of the target subject image on the target image may be adjusted.

In some optional implementations, after the generating the target image based on the target subject image, the superimposition region, and the third image, the method further includes: determining, according to the adjustment rule, a second region corresponding to the target image; adjusting the superimposition region when the terminal device receives a second operation on the second region, to obtain an adjusted superimposition region, display content of the adjusted superimposition region being different from display content of the superimposition region, and a size of the adjusted superimposition region being the same as a size of the superimposition region; and updating the target image based on the target subject image, the adjusted superimposition region, and the third image. According to the foregoing method, the display content of the superimposition region may be adjusted based on the second operation performed by the user on the second region.

In some optional implementations, the second operation is one of or a combination of more of the following operations: a zoom-in operation, a zoom-out operation, and a movement operation. According to the foregoing method, the display content of the superimposition region may be adjusted.

In some optional implementations, when a plurality of superimposition regions exist, the generating the target image based on the target subject image, the superimposition region, and the third image includes: determining display rankings corresponding to the plurality of superimposition regions; determining a first superimposition region in the plurality of superimposition regions based on the display rankings; and generating the target image based on the target subject image, the first superimposition region, and the third image. According to the foregoing method, when the plurality of superimposition regions are determined, a superimposition region to be presented first may be determined in the plurality of superimposition regions.

In some optional implementations, after the displaying the wallpaper, the method further includes: determining, based on a preset time interval and the display rankings, a second superimposition region corresponding to current time in the plurality of superimposition regions; and obtaining and displaying an updated wallpaper by updating the wallpaper based on the second superimposition region. According to the foregoing method, the plurality of superimposition regions may be displayed in turn based on the preset time interval and the determined display rankings of the plurality of superimposition regions, so that the currently displayed wallpaper is updated, thereby bringing richer user experience to the user.

In some optional implementations, after the displaying the wallpaper, the method further includes: determining, based on the display rankings, a second superimposition region corresponding to current time in the plurality of superimposition regions if the terminal device is detected to be in a screen-locked state; and obtaining and displaying an updated wallpaper by updating the wallpaper based on the second superimposition region. According to the foregoing method, after the user selects a plurality of second images to obtain the plurality of superimposition regions, the plurality of superimposition regions may be displayed in turn based on the display rankings of the plurality of superimposition regions each time the user enters the screen-locked state, which implements updating the currently displayed wallpaper each time the user enters the screen-locked state, bringing richer user experience to the user.

A second aspect of this application discloses a terminal device, including a processor and a memory, the memory being configured to store instructions, and the processor being configured to invoke the instructions in the memory, to enable the terminal device to perform the wallpaper setting method according to the first aspect.

A third aspect of this application discloses a computer-readable storage medium, including computer instructions, where the computer instructions, when run on a terminal device, enable the terminal device to perform the wallpaper setting method according to the first aspect.

It should be understood that, the terminal device according to the second aspect and the computer-readable storage medium according to the third aspect that are provided above both correspond to the method according to the first aspect. Therefore, for beneficial effects that can be achieved by the terminal device according to the second aspect, refer to beneficial effects in the corresponding methods provided above, and details are not described herein again.

### BRIEF DESCRIPTION OF DRAWINGS

FIG. 1 is a schematic flowchart of a wallpaper setting method according to an embodiment of this application;
FIG. 2 is a schematic diagram of displaying a wallpaper preview interface in response to a tap performed by a user on a wallpaper synthesis control according to an embodiment of this application;
FIG. 3 is a schematic diagram of displaying a wallpaper editing window according to an embodiment of this application;
FIG. 4 is a schematic diagram of displaying a gallery image in response to a tap on a subject image replacement control according to an embodiment of this application;
FIG. 5 is a schematic diagram of updating a second option based on a selection operation on a first option according to an embodiment of this application;
FIG. 6 is a schematic diagram of subject extraction according to an embodiment of this application;
FIG. 7 is a schematic diagram of determining a superimposition region in a superimposition image based on a target subject image according to an embodiment of this application;
FIG. 8 is a schematic diagram of displaying a gallery image in response to a tap on a superimposition image replacement control according to an embodiment of this application;
FIG. 9 is a schematic diagram of dividing a superimposition region based on a superimposition range according to an embodiment of this application;
FIG. 10 is a schematic diagram of a drag control bar of a superimposition range according to an embodiment of this application;
FIG. 11 is a schematic diagram of an image superimposition sequence according to an embodiment of this application;
FIG. 12 is a schematic diagram of determining a first region according to an embodiment of this application;
FIG. 13 is a schematic diagram of adjusting a superimposition region based on a second operation according to an embodiment of this application; and
FIG. 14 is a schematic structural diagram of a terminal device according to an embodiment of this application.

### DESCRIPTION OF EMBODIMENTS

The following terms "first" and "second" are merely intended for a purpose of description, and shall not be understood as an indication or implication of relative importance or implicit indication of a quantity of indicated technical features. In view of this, a feature defined to be "first" or "second" may explicitly or implicitly include one or more features. In descriptions of embodiments of this application, terms such as "as an example", "alternatively", and "for example" are used to represent giving an example, an illustration, or a description. Any embodiment or design scheme described as "as an example" or "for example" in embodiments of this application should not be explained as being more preferable or having more advantages than other embodiments or design schemes. Exactly, use of the terms such as "as an example", "alternatively", and "for example", is intended to present a related concept in a specific manner.

Unless defined otherwise, all the technical and scientific terms used herein have the same meaning as those commonly understood by those of ordinary skill in the art to which this application pertains. Terms used in the specification of this application are merely for the purpose of describing specific embodiments, but are not intended to limit this application. It is to be understood that in this application, unless otherwise specified, "/" represents "or". For example, A/B may represent A or B. In this application, "and/or" describes only an association relationship for describing associated objects and represents that three relationships may exist. For example, A and/or B may indicate A alone, both A and B, and B alone. "At least one" means one or more. "A plurality of" means two or more. For example, at least one of a, b, or c may represent a, b, and c; a and b; a and c; b and c; a; b; and c. It should be understood that a sequence of steps shown in the flowcharts in this specification may be changed, and some steps may also be omitted.

A wallpaper is an important carrier for presenting an overall visual style of a terminal product. When setting the wallpaper, a user usually selects a picture directly as the wallpaper, and a wallpaper setting manner is monotonous. Content of a screen locking wallpaper is content in the picture, and does not include other elements outside the picture. Therefore, the screen locking wallpaper is monotonous. In a wallpaper setting process, the user selects a photo, and does not need to perform other interaction with a terminal device. Therefore, wallpaper-based interaction is not rich enough, a sense of user participation during wallpaper setting is poor, and personalized settings of the user for the wallpaper cannot be satisfied. In a related technology, the wallpaper may be generated based on two pictures. However, in a wallpaper generation process, the two pictures are directly and simply superimposed, and a visual effect of the wallpaper obtained through superimposition is also poor.

To resolve technical problems that the wallpaper setting manner is monotonous, human computer interaction in the wallpaper generation process is not rich enough, a sense of user participation is poor, and the personalized settings of the user for the wallpaper cannot be satisfied, embodiments of this application provide a wallpaper setting method. A first image and a second image may be determined based on selection of the user. In the wallpaper generation process, a quantity of times of human computer interaction is increased, the sense of user participation is increased, and the personalized settings of the user for the wallpaper are satisfied. In addition, a superimposition region is determined in the second image based on a target subject image of the first image, and a size of the target subject image is the same as a size of the superimposition region, so that the target subject image can be perfectly superimposed on the superimposition region, thereby presenting a better superimposition effect, and obtaining a more aesthetic wallpaper.

The wallpaper setting method provided in embodiments of this application is applied to a terminal device including a display screen. For example, the terminal device in embodiments of this application may be a terminal device like a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an artificial intelligence (artificial intelligence, AI) device, a wearable device, a vehicle-mounted device, a smart household device, and/or a smart city device. A specific form of the terminal device is not specially limited in embodiments of this application.

To better understand embodiments of this application, the wallpaper setting method provided in embodiments of this application is described below by using an example with reference to the accompanying drawings. The following several specific embodiments may be implemented independently or combined with each other, and same or similar concepts or processes may not be repeatedly described in some embodiments.

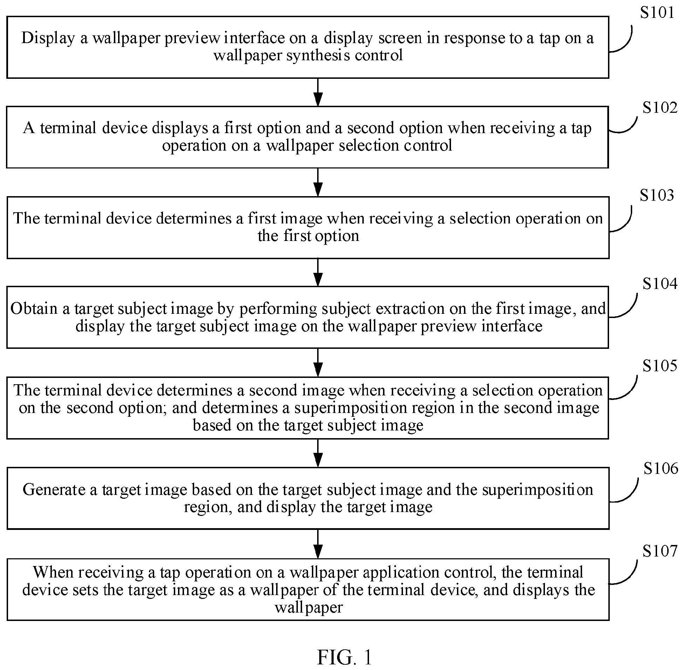

FIG. 1 is a schematic flowchart of a wallpaper setting method according to an embodiment of this application. The wallpaper setting method is applied to a terminal device including a display screen. Based on different requirements, a sequence of steps in the flowchart may be changed, and some steps may be omitted. As shown in FIG. 1, the method includes:
Step S101: Display a wallpaper preview interface on the display screen in response to a tap on a wallpaper synthesis control.

The wallpaper preview interface may include a wallpaper selection control and a wallpaper application control. The wallpaper synthesis control is configured to superimpose images selected by a user, to generate a wallpaper. The wallpaper synthesis control may be represented by using different names, such as a double-exposure control. This is not limited herein. For example, the wallpaper may be generated based on a determined subject image and superimposition image. The subject image is an image used for determining a target subject, and subject extraction may be performed on the subject image to obtain the target subject. The superimposition image is an image to be superimposed on the target subject. A superimposition region for superimposition on the target subject may be determined in the superimposition image, and the superimposition region is used for superimposition on the target subject.

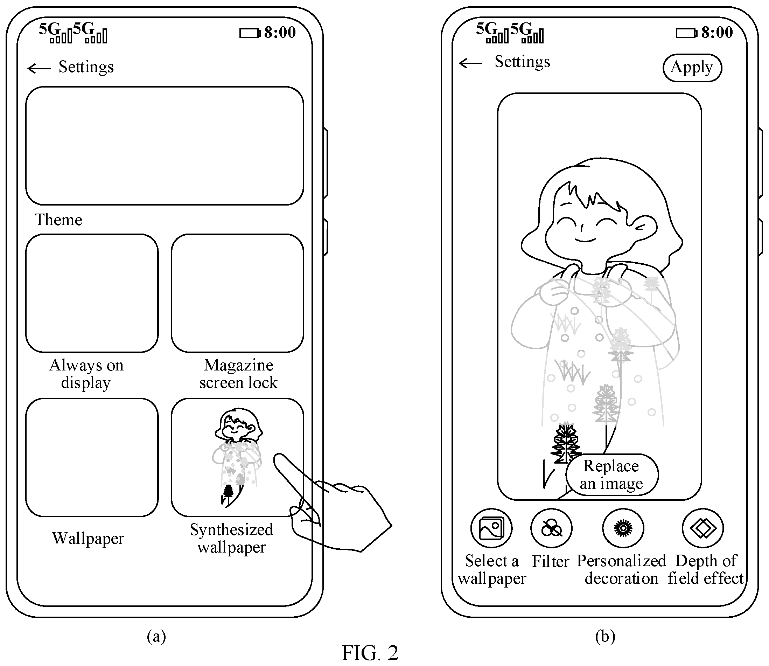

In an embodiment of this application, the wallpaper synthesis control may include a thumbnail of a preset wallpaper. The preset wallpaper is a preset synthetic picture that may be used as the wallpaper. The preset wallpaper includes a corresponding preset subject image and a corresponding preset superimposition image. The preset superimposition image is to be superimposed on the preset subject image. After the terminal device receives a selection operation performed by the user on the wallpaper synthesis control, the wallpaper preview interface of the wallpaper synthesis control may be displayed on the terminal device, that is, the preset wallpaper is displayed. FIG. 2 is a schematic diagram of displaying a wallpaper preview interface in response to a tap performed by a user on a wallpaper synthesis control according to an embodiment of this application. As shown in (a) in FIG. 2, the terminal device may display the wallpaper synthesis control and other wallpaper options, such as an option of "Always on display" and an option of "Magazine screen lock", on a wallpaper setting page. As shown in (b) in FIG. 2, in response to the selection operation performed by the user on the wallpaper synthesis control, the terminal device may display the wallpaper preview interface. The wallpaper preview interface includes the preset wallpaper corresponding to the wallpaper synthesis control.

In an embodiment of this application, the user may trigger a wallpaper setting instruction by performing a preset gesture action on the display screen. After receiving the wallpaper setting instruction, the terminal device displays the wallpaper setting page, and the wallpaper setting page includes the wallpaper synthesis control. The gesture action may be set based on an actual situation, for example, including long-pressing a blank region on a home screen, and selecting a preset option, for example, selecting an option of "Desktop and wallpaper option" in a displayed pop-up window, to trigger the wallpaper setting instruction. For another example, the user performs the preset gesture action on the display screen, like a two-hand pinch gesture, to trigger the wallpaper setting instruction. Alternatively, the user may enter a "Settings" menu of a mobile phone, and select the option of "Desktop and wallpaper option" or an option of "Display and brightness", to trigger the wallpaper setting instruction. Alternatively, the user may select the option of "Desktop and wallpaper option" from an opened setting panel by using a notification bar, for example, dropping down the notification bar, and taping a "Settings" icon at the top of the notification bar, to trigger the wallpaper setting instruction. Alternatively, the user opens an application program list of the terminal device, and selects an application program named "Desktop and wallpaper option" or a similar name, to trigger the wallpaper setting instruction. Alternatively, the user may select a wallpaper setting control corresponding to a target image by opening an album or a gallery application program, to trigger the wallpaper setting instruction. The wallpaper setting control is configured to set the target image as the wallpaper.

Step S102: The terminal device displays a first option and a second option when receiving a tap operation on a wallpaper selection control.

In this embodiment of this application, the wallpaper preview interface includes the wallpaper selection control. The wallpaper selection control is configured to select an image used for generating the wallpaper, for example, selecting the subject image and the superimposition image. In an embodiment of this application, the wallpaper selection control may include a selection control, for example, a control of "Select a wallpaper" shown in (b) in FIG. 2. In another embodiment, the wallpaper selection control may further include a replacement control, for example, a control of "Replace a picture" shown in (b) in FIG. 2.

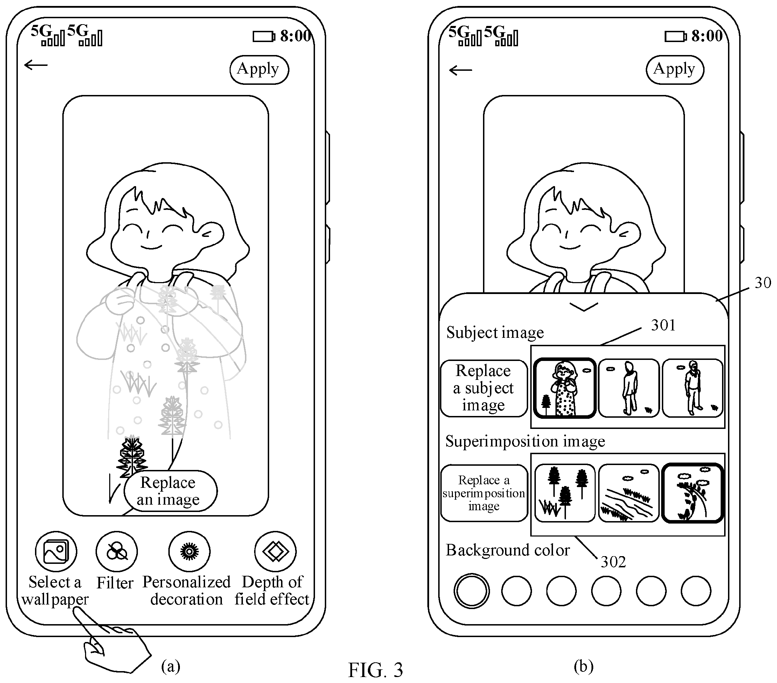

When receiving the tap operation performed by the user on the wallpaper selection control, the terminal device displays at least one first option and at least one second option on the wallpaper preview interface. A quantity of displayed first options and a quantity of displayed second options are not limited in embodiments of this application. The first option is a zoomed-out image corresponding to a recommended subject image. Each first option corresponds to one recommended subject image. The second option is a zoomed-out image corresponding to a recommended superimposition image. Each second option corresponds to one recommended superimposition image. In an embodiment of this application, the terminal device may display the first option and the second option by using a wallpaper editing window. For example, when receiving the tap operation performed by the user on the wallpaper selection control, the terminal device displays the wallpaper editing window on the wallpaper preview interface. The wallpaper editing window includes the first option and the second option. FIG. 3 is a schematic diagram of displaying a wallpaper editing window according to an embodiment of this application. As shown in (a) in FIG. 3, the wallpaper preview interface includes the wallpaper selection control. As shown in (b) in FIG. 3, in response to a tap performed by the user on the wallpaper selection control, a wallpaper editing window 30 is displayed on the wallpaper preview interface, and the wallpaper editing window 30 includes three first options 301 and three second options 302. As shown in (b) in FIG. 3, each first option is a zoomed-out image corresponding to one recommended subject image. Different first options correspond to different recommended subject images. Each second option is a zoomed-out image corresponding to one recommended superimposition image. Different second options correspond to different recommended superimposition images.

In an embodiment of this application, the recommended subject image and the recommended superimposition image may be determined according to a preset recommendation rule. The recommendation rule may be set based on user requirements. For example, the recommendation rule may include determining subject images that are in official recommended images and whose user utilization rates rank the first three as recommended subject images, and determining superimposition images that are in the official recommended images and whose user utilization rates rank the first three as recommended superimposition images, or may include determining an image that is most recently photographed by the user and that includes the subject image as a recommended subject image, and determining an image that is most recently photographed by the user as a recommended superimposition image.

For a selection operation in an embodiment of this application, when receiving the tap operation on the wallpaper selection control, and displaying the first option and the second option, the terminal device further displays a subject image replacement control. The subject image replacement control is configured to select a subject image of the generated wallpaper, as shown in (b) in FIG. 3. When a tap operation performed by the user on the subject image replacement control is received, a gallery image is displayed on the wallpaper preview interface; and if a selection operation performed by the user on any displayed gallery image is received, the any gallery image is determined as the subject image of the generated wallpaper. The gallery image is an image stored into a gallery in the terminal device. In an embodiment of this application, when the tap operation performed by the user on the subject image replacement control is received, all gallery images may be sequentially displayed on the wallpaper preview interface based on a time sequence of storing the images into the gallery. For example, the later the image is stored into the gallery, the more front the image is displayed on the wallpaper preview interface; and the earlier the image is stored into the gallery, the more back the image is displayed on the wallpaper preview interface. To reduce time required by the user to search for an image, the gallery image may be displayed based on a label of the gallery image. In another embodiment of this application, when the tap operation performed by the user on the subject image replacement control is received, the gallery image that needs to be displayed on the wallpaper preview interface may be determined based on the label of the gallery image and according to a preset display rule. The label of the gallery image is used for classifying the image, for example, a person, a top pick, a scenery, an animal, or a building. The display rule is used for determining a type of an image displayed on the wallpaper preview interface after the user taps an option of "Replace a subject image". The display rule may be set based on user requirements. For example, a gallery image whose label is a person is displayed after the user taps the option of "Replace a subject image", or a gallery image whose label is a top pick may be displayed after the user taps the option of "Replace a subject image". The image whose label is a top pick may be an image recommended officially, or may be an image that is suitable for the subject image after intelligent recognition.

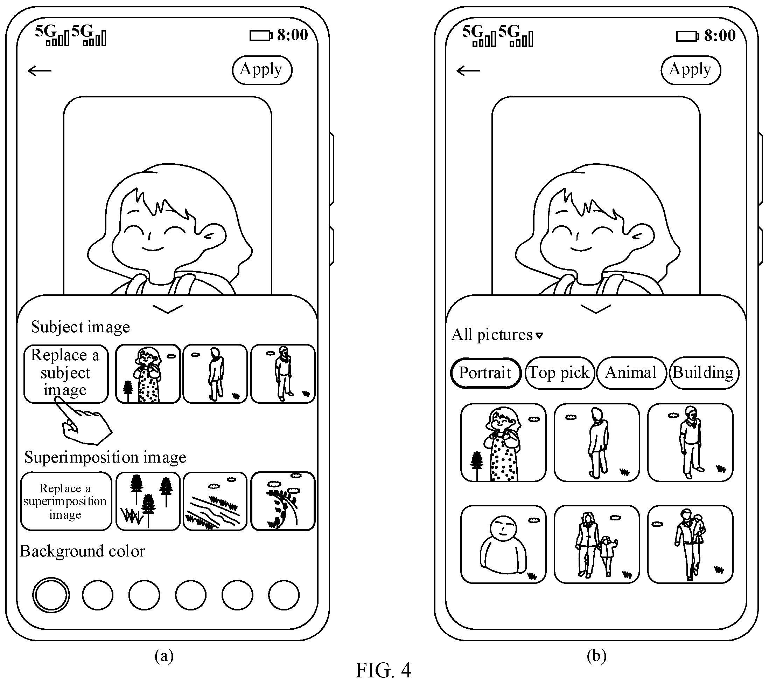

FIG. 4 is a schematic diagram of displaying a gallery image in response to a tap on a subject image replacement control according to an embodiment of this application. As shown in FIG. 4, as shown in (a) and (b) in FIG. 4, when receiving a tap operation performed by the user on the option of "Replace a subject image", the terminal device displays a gallery image whose label is a person on the wallpaper preview interface. A corresponding image is displayed based on the label, so that it can be avoided that an image of a complicated category is displayed on the wallpaper preview interface, and consequently, it is difficult for the user to quickly position the first image. A label selection manner can help the user quickly determine the first image from a specified category. In an implementation, the wallpaper preview interface further includes a label corresponding to another image in the gallery, for example, at least one label like a top pick, a scenery, and a building. When receiving a selection operation performed by the user on any label, the terminal device displays an image corresponding to the any label on the wallpaper setting page. For example, as shown in (b) in FIG. 4, an image whose label is a person in the gallery is displayed on the wallpaper setting page. When receiving a selection operation performed by the user on a label represented as an animal, the terminal device stops displaying the image whose label is a person in the gallery on the wallpaper setting page, and displays the image whose label is an animal in the gallery. In the foregoing implementation, categories of images displayed on the wallpaper preview interface may be changed by switching labels. In an implementation, when receiving a cancellation operation performed by the user on a currently selected label, the terminal device may display all types of images on the wallpaper setting page. For example, as shown in (b) in FIG. 4, the currently selected label is a person. When the user performs the cancellation operation on the label represented as a person, for example, taps the image whose label represented as a person, in this case, the user does not select another label, and all types of images may be displayed on the wallpaper setting page. All types of images may be displayed based on time of being stored into the gallery. For example, the later the image is stored into the gallery, the more front the image is displayed on the wallpaper preview interface; and the earlier the image is stored into the gallery, the more back the image is displayed on the wallpaper preview interface.

In an embodiment of this application, after the gallery image is displayed on the wallpaper preview interface, the user may perform a preset action in a display region of the gallery image, to change image content displayed on the wallpaper preview interface. For example, the user may perform a swipe down operation in the display region of the gallery image, so that through swiping down in the display region, a current display interface displays a gallery image that has not been displayed. Alternatively, the user may perform a swipe up operation in the display region of the gallery image, so that through swiping up in the display region, the current display interface displays a gallery image that has been displayed.

Step S103: The terminal device determines a first image when receiving a selection operation on the first option.

In an embodiment of this application, when the selection operation performed by the user on any first option is received, a recommended subject image corresponding to the any first option is determined as the target subject image for generating the wallpaper, that is, the recommended subject image corresponding to the any first option is determined as the first image. In an embodiment of this application, after the terminal device receives the tap operation on the wallpaper selection control to display the first option, as shown in (b) in FIG. 3, the terminal device selects, by default from at least one displayed first option, a first option corresponding to a thumbnail of the preset subject image corresponding to the preset wallpaper.

In an embodiment of this application, if a selection operation performed by the user on any displayed gallery image is received, the any gallery image is determined as the subject image for generating the wallpaper, and a first control is updated based on the any gallery image, so that an updated first control includes a zoomed-out image corresponding to the any gallery image. After the first control is updated, the first control corresponding to the any gallery image is in a selected state. In this embodiment, the selection operation performed by the user on the any displayed gallery image is equivalent to the selection operation on the first option. If the selection operation performed by the user on the any displayed gallery image is received, the any gallery image is determined as the first image.

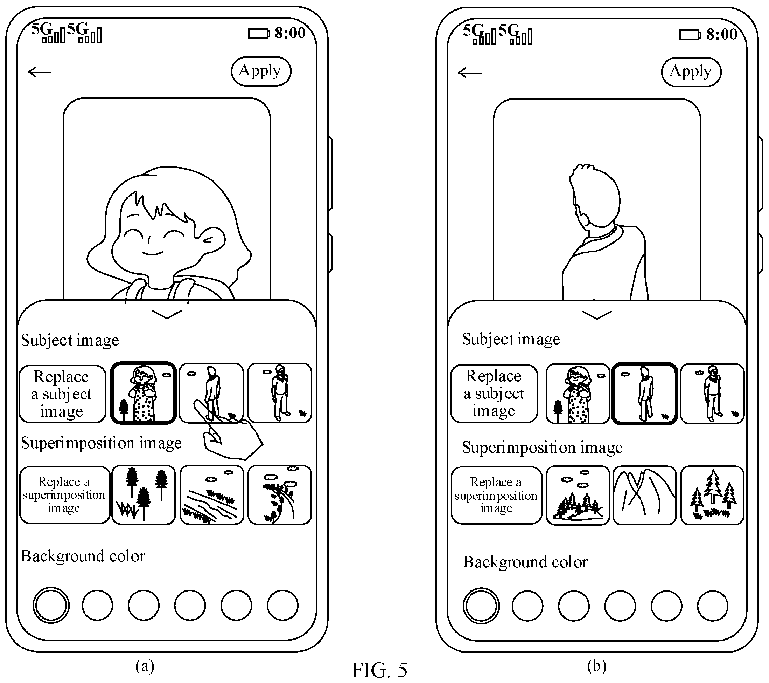

In an embodiment of this application, when receiving the selection operation on the first option, the terminal device updates the second option based on the selected first option and according to a preset matching rule, so that an updated second option matches the selected first option. FIG. 5 is a schematic diagram of updating a second option based on a selection operation on a first option according to an embodiment of this application. As shown in (a) in FIG. 5, a pre-selected first option is a first option corresponding to a thumbnail of a girl. As shown in (a) and (b) in FIG. 5, after receiving a selection operation performed by the user on a first option corresponding to a thumbnail of a man, the terminal device updates the second option, where an updated second option and the second option before updating include different recommended superimposition images. In the foregoing embodiment, the second option is updated based on the selected first option, so that the updated second option matches the selected first option to a higher extent, and the user can more conveniently select a recommended superimposition image better matching the selected recommended subject image.

In an embodiment of this application, the matching rule may include a main color matching rule. Each picture has a corresponding main color. The main color of the picture refers to a color that dominates or most frequently appears in the picture, is a color that has most significance and importance in the entire picture, and may be used for representing an overall hue and an overall style of the picture. The main color matching rule may include a correspondence between different main colors. One main color may correspond to one or more other main colors. A first main color corresponding to the recommended superimposition image corresponding to the currently selected first option may be determined; a second main color corresponding to the first main color is determined according to the main color matching rule, where one first main color may correspond to one or more second main colors; at least one superimposition recommendation image is determined based on the determined second main color; and the second option is updated based on the superimposition recommendation image, so that a main color of the updated second option matches a main color of the selected first option. The main color of the superimposition recommendation image is the second main color. In an implementation of this application, retrieval may be performed in a first gallery based on the determined second main color, and an image whose main color in the first gallery is the second main color is determined as a second gallery. The first gallery may be a gallery for storing officially recommended pictures, or may be a gallery for storing all pictures of the terminal device. If a plurality of second main colors are determined, the superimposition recommendation image may be determined based on each second main color, thereby obtaining a plurality of superimposition recommendation images. If one second main color is determined, a plurality of recommended superimposition images whose main colors are the second main color may be determined based on the second main color, to obtain a plurality of superimposition recommendation images. In an implementation of this application, a main color of an image may be determined based on image editing software, an online color palette tool, or a color analysis tool. For example, the first main color of the subject image and the second main color of the superimposition image are determined. In the foregoing embodiment, the superimposition recommendation image matching the selected first option is determined by using the main color matching rule, so that the determined superimposition recommendation image matches the selected first option in color, thereby enabling the user to more conveniently select a target superimposition image more matching a color of a selected recommended subject image.

In an embodiment of this application, the matching rule may include an information matching rule. After the selection operation is performed on the first option, photographing information of the recommended subject image corresponding to the selected first option may be determined, for example, information such as a photographing time and a photographing place, and a superimposition recommendation image matching the photographing information is determined; and the second option displayed on the wallpaper preview interface is updated based on the superimposition recommendation image, so that the photographing information of the recommended superimposition image corresponding to the updated second option matches the photographing information of the recommended subject image corresponding to the selected first option. In an implementation of this application, retrieval may be performed in the second gallery of the terminal device based on the determined photographing information, and an image matching the photographing information in the second gallery is determined as the superimposition recommendation image. The second gallery may be a gallery for storing pictures photographed by the user, or may be a gallery for storing all pictures of the terminal device. For example, when a photographing time of an image in the second gallery is the same as a photographing time of a picture corresponding to the selected first option, and/or a photographing place of the image is the same as a photographing place of the picture corresponding to the currently selected first option, it is determined that the image is the superimposition recommendation image matching the photographing information corresponding to the first option. In the foregoing embodiment, the superimposition recommendation image matching the selected first option is determined by using the information matching rule, so that the determined superimposition recommendation image matches the selected first option in terms of photographing information, thereby enabling the user to more conveniently select a target superimposition image that matches, in the photographing information, the selected recommended subject image.

In an embodiment of this application, a plurality of superimposition recommendation images may be determined according to both the main color matching rule and the information matching rule, and the second option is updated based on the determined plurality of superimposition recommendation images, so that the updated second option includes the second option matching the first main color of the selected first option and the second option matching the photographing information of the selected second option.

Step S104: Obtain a target subject image by performing subject extraction on the first image, and display the target subject image on the wallpaper preview interface.

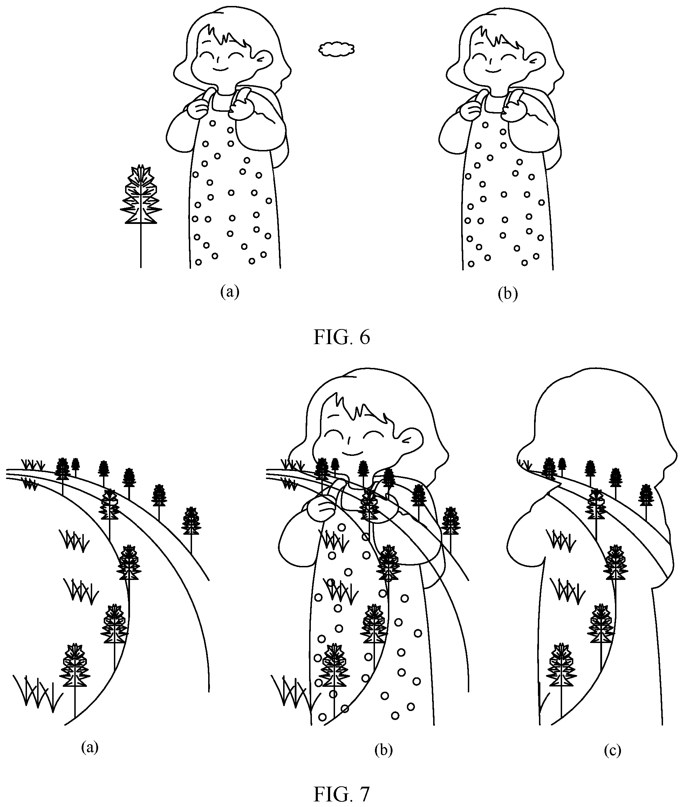

In an embodiment of this application, the subject may refer to a part or an object that is most eye-catching and that most focuses attention in an image, and may include a person, an object, a scene, and a detail. For example, the person may include a single person or a plurality of persons. The object may include an automobile, a building, food, an animal, or the like. The scene may include a mountain, a beach, and a forest. The detail may refer to a part having a particular meaning, and may be a flower, an eye, a palm, or the like. A subject in an image may be extracted in a subject extraction manner. The target subject image is a partial image corresponding to a subject in the first image. FIG. 6 is a schematic diagram of subject extraction according to an embodiment of this application. (a) in FIG. 6 is a first image, and the first image includes a girl, a white cloud, and a tree. A subject in the first image is the girl. Subject extraction is performed on the first image shown in (a) in FIG. 6, to obtain a target subject image shown in (b) in FIG. 6, that is, a partial image corresponding to the girl in (a) in FIG. 6.

In an embodiment of this application, subject extraction may be performed on the first image based on a preset detection manner. For example, subject extraction may be performed on the first image based on methods such as a color segmentation method, an edge detection method, semantic segmentation through deep learning, and a texture and shape feature segmentation method. For another example, subject extraction may be performed on the first image based on a model completed through pre-training. For example, subject extraction is performed on the first image by using a deep learning model Mask R-CNN completed through training. In this embodiment of this application, an implementation method of subject extraction is not limited.

In an embodiment of this application, the displaying the obtained target subject image on the wallpaper preview interface includes: determining a superimposition region in a preset superimposition region based on the target subject image, a size of the superimposition region being the same as a size of the target subject image; and generating a target image based on the target subject image and the determined superimposition region, and displaying the generated target image on the wallpaper preview interface. FIG. 7 is a schematic diagram of determining a superimposition region in a superimposition image based on a target subject image according to an embodiment of this application. As shown in (a) in FIG. 7, the preset superimposition image is shown. As shown in (b) and (c) in FIG. 7, the superimposition region is determined in the preset superimposition image based on an image contour of the target subject image, and the size of the superimposition region is the same as the size of the target subject image. In an implementation of this application, a region having a same size as the target subject image may be determined in any region in the preset superimposition image, and the region is determined as the superimposition region. In an implementation of this application, a region having a same size as the target subject image may be determined in a region having rich colors in the preset superimposition image, and the region is determined as the superimposition region. For example, a region having a same size as the target subject image may be determined in an image region in which a color variance of region pixels is greater than a preset variance threshold in the preset superimposition image, and the region is determined as the superimposition region. The method may enable the superimposition region to have richer colors, thereby improving visual experience. In this embodiment of this application, a manner of determining the superimposition region is not limited.

In an implementation of this application, when the terminal device receives the tap operation on the wallpaper selection control, the displayed first option includes the thumbnail of the preset subject image corresponding to the preset wallpaper, and the displayed second option includes the thumbnail of the preset superimposition image corresponding to the preset wallpaper. After the second option is displayed, as shown in (b) in FIG. 3, the second option corresponding to the thumbnail of the preset subject image is selected by default. If the determined first image is inconsistent with the preset subject image and the currently selected second option is a zoomed-out image of the preset superimposition image, subject extraction is performed on the determined first image, to obtain the target subject image, and the superimposition region is determined in the preset superimposition image based on the target subject image, the size of the superimposition region being the same as the size of the determined target subject image; and the target image is generated based on the target subject image and the determined superimposition region, and the generated target image is displayed on the wallpaper preview interface. If the determined first image is consistent with the preset subject image and the image corresponding to the currently selected second option is not the zoomed-out image of the preset superimposition image, subject extraction is performed on the determined first image, to obtain the target subject image, and based on the target subject image, the superimposition region is determined in the image corresponding to the currently selected second option, the size of the determined superimposition region being the same as the size of the target subject image; and the target image is generated based on the target subject image and the determined superimposition region, and the generated target image is displayed on the wallpaper preview interface. If the determined first image is consistent with the preset subject image and the image corresponding to the currently selected second option is the zoomed-out image of the preset superimposition image, the currently displayed wallpaper on the wallpaper preview interface is not adjusted. If the preset wallpaper displayed on the wallpaper preview interface is not adjusted, the currently displayed wallpaper continues to be displayed. In the foregoing implementation, when the first image does not change relative to the preset subject image, it may be determined that a subject part of the wallpaper generated based on the first image does not change relative to a subject part of the currently displayed wallpaper. For example, if one or more pieces of content such as a contour, a size, and content of the subject part do not change, the currently displayed wallpaper is not adjusted, thereby avoiding a waste of computational power.

Step S105: The terminal device determines a second image when receiving a selection operation on the second option; and determines a superimposition region in the second image based on the target subject image.

In an embodiment of this application, when the selection operation performed by the user on any second option is received, a recommended superimposition image corresponding to the any second option is determined as the target superimposition image for generating the wallpaper, that is, the recommended superimposition image corresponding to the any second option is determined as the second image. In an embodiment of this application, after receiving the tap operation on the wallpaper selection control to display the second option, as shown in (b) in FIG. 3, the terminal device selects, by default from at least one displayed second option, a second option corresponding to the thumbnail of the preset superimposition image corresponding to the preset wallpaper.

In an embodiment of this application, when receiving the tap operation on the wallpaper selection control, and displaying the first option and the second option, the terminal device further displays a superimposition image replacement control. The superimposition image replacement control is configured to select a superimposition image of the generated wallpaper, as shown in (b) in FIG. 3. When a tap operation performed by the user on the superimposition image replacement control is received, a gallery image is displayed on the wallpaper preview interface; and if a selection operation performed by the user on any displayed gallery image is received, the any gallery image is determined as the superimposition image of the generated wallpaper. The gallery image is an image stored into a gallery in the terminal device. In an embodiment of this application, when the tap operation performed by the user on the superimposition image replacement control is received, all gallery images may be sequentially displayed on the wallpaper preview interface based on a time sequence of storing the images into the gallery. For example, the later the image is stored into the gallery, the more front the image is displayed on the wallpaper preview interface; and the earlier the image is stored into the gallery, the more back the image is displayed on the wallpaper preview interface. To reduce time required by the user to search for an image, the gallery image may be displayed based on a label of the gallery image. In another embodiment of this application, when the tap operation performed by the user on the superimposition image replacement control is received, the gallery image that needs to be displayed on the wallpaper preview interface may be determined based on the label of the gallery image and according to a preset display rule. The label of the gallery image is used for classifying the image, for example, a person, a top pick, a scenery, an animal, or a building. The display rule is used for determining a type of an image displayed on the wallpaper preview interface after the user taps an option of "Replace a superimposition image". The display rule may be set based on user requirements. For example, a gallery image whose label is a scenery is displayed after the user taps the option of "Replace a superimposition image", or a gallery image whose label is a top pick may be displayed after the user taps the option of "Replace a superimposition image". The image whose label is a top pick may be an image recommended officially, or may be an image that is suitable for the superimposition image after intelligent recognition.

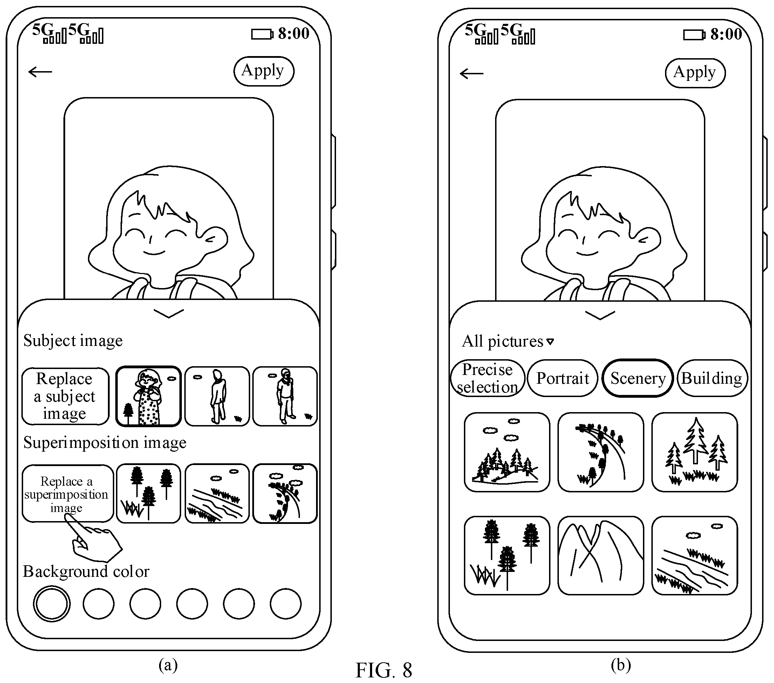

FIG. 8 is a schematic diagram of displaying a gallery image in response to a tap on a superimposition image replacement control according to an embodiment of this application. As shown in FIG. 8, as shown in (a) and (b) in FIG. 8, when receiving the tap operation performed by the user on the superimposition image replacement control, the terminal device displays a gallery image whose label is a scenery on the wallpaper preview interface. A corresponding image is displayed based on the label, so that it can be avoided that an image of a complicated category is displayed on the wallpaper preview interface, and consequently, it is difficult for the user to quickly position a first image. A label selection manner can help the user quickly determine the first image from a specified category. In an implementation, the wallpaper preview interface further includes a label corresponding to another image in the gallery, for example, at least one label like a top pick, a scenery, and a building. When receiving a selection operation performed by the user on any label, the terminal device displays an image corresponding to the any label on the wallpaper setting page. For example, as shown in (b) in FIG. 8, an image whose label is a scenery in the gallery is displayed on the wallpaper setting page. When the terminal device receives a selection operation performed by the user on a label represented as a building, the terminal device stops displaying the image whose label is a scenery in the gallery on the wallpaper setting page, and displays the image whose label is a building in the gallery. In the foregoing implementation, categories of images displayed on the wallpaper preview interface may be changed by switching labels. In an implementation, when receiving a cancellation operation performed by the user on a currently selected label, the terminal device may display all types of images on the wallpaper setting page. For example, as shown in (b) in FIG. 8, the currently selected label is a scenery. When the user performs the cancellation operation on the label represented as a scenery, for example, taps the image of the label represented as a scenery, the user does not select another label, and all types of images may be displayed on the wallpaper setting page. All types of images may be displayed based on time of being stored into the gallery. For example, the later the image is stored into the gallery, the more front the image is displayed on the wallpaper preview interface; and the earlier the image is stored into the gallery, the more back the image is displayed on the wallpaper preview interface.

In an embodiment of this application, after the second image is determined, a superimposition region is determined in the second image based on the target subject image, a size of the superimposition region determined in the second image being the same as a size of the target subject image; and the target image is generated based on the target subject image and the determined superimposition region, and the generated target image is displayed on the wallpaper preview interface. In an implementation of this application, if the determined second image is inconsistent with the preset superimposition image, the superimposition region in the second image is determined based on the target subject image; and if the preset subject image is consistent with the target subject image, the currently displayed wallpaper is not adjusted, and if the preset wallpaper is not adjusted, the currently displayed wallpaper continues to be displayed. In the foregoing implementation, when the second image does not change relative to the preset superimposition image, it may be determined that a superimposition part of the wallpaper generated based on the second image does not change relative to the superimposition part of the currently displayed wallpaper. For example, content included in the superimposition part does not change, and the currently displayed wallpaper is not adjusted, thereby avoiding a waste of computational power. For some specific implementations of determining the superimposition region in the second image based on the target subject image, refer to the related descriptions above, for example, the related descriptions of determining the superimposition region in the preset superimposition image based on the target subject image.

In an embodiment of this application, after the superimposition region is determined in the second image based on the target subject image, another region other than the superimposition region in the second image may be cropped, so that a cropped second image includes only the superimposition region. Alternatively, transparency of another region other than the superimposition region in the second image may be set to 0%, so that the another region is invisible.

In some embodiments of this application, to enable the displayed wallpaper to be updated automatically, a plurality of second images may be determined based on selection of the user. For example, an option of "Multi-superimposition image" may be displayed on the wallpaper preview interface, and in response to a tap operation performed by the user on the option of "Multi-superimposition image", the plurality of second images may be determined based on selection of the user. The superimposition region may be determined in each second image determined by the user based on the target subject image.

Step S106: Generate a target image based on the target subject image and the superimposition region, and display the target image.

In an embodiment of this application, the target subject image and the superimposition region may be superimposed based on a superimposition range, to generate the target image. The superimposition range may be set based on an actual situation. A larger superimposition range indicates more visible parts in the superimposition region; and a smaller superimposition range indicates fewer visible parts in the superimposition region. A visible part and an invisible part in the superimposition region may be determined based on the superimposition range. Transparency of the superimposition region is determined based on the determined visible part and the determined invisible part; and a superimposition region whose transparency setting is completed is superimposed on the target subject image, to generate the target image.

In some implementations of this application, the visible part and the invisible part in the superimposition region may be determined based on a width and the superimposition range of the superimposition region. For example, the superimposition region may be divided into an upper half part and a lower half part based on the width and the superimposition range of the superimposition region. The upper half part may be set as the visible part and the lower half part may be set as the invisible part, or the upper half part may be set as the invisible part and the lower half part may be set as the visible part. In some manners, a ratio of the invisible part to the visible part may be determined based on the superimposition range. For example, when the superimposition range is 60%, it is determined that the ratio of the invisible part to the visible part is 4:6; when the superimposition range is 50%, it is determined that the ratio of the invisible part to the visible part is 5: 5; and when the superimposition range is 40%, it is determined that the ratio of the invisible part to the visible part is 6: 4.

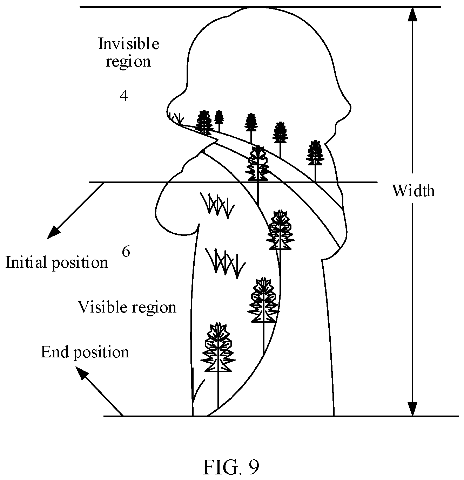

In some other implementations of this application, the superimposition region may be divided into a left half part and a right half part based on a length and the superimposition range of the superimposition region. The left half part may be set as a visible region and the right half part may be set as an invisible region, or the left half part may be set as the invisible region and the right half part may be set as the visible region. An actual application is not limited to the foregoing example. Descriptions are provided below by using an example in which the superimposition region is divided into the upper half part and the lower half part based on the width and the superimposition range of the superimposition region, where the upper half part is the invisible part, and the lower half part is the visible part. FIG. 9 is a schematic diagram of dividing a superimposition region based on a superimposition range according to an embodiment of this application. For example, the superimposition range is 60%. As shown in FIG. 9, the superimposition region is divided based on widths into two parts whose widths are 4: 6, an upper half part is the invisible part in the superimposition region, and a lower half part is the visible part in the superimposition region.

In an embodiment of this application, transparency of the invisible part in the superimposition region is 0%. The visible part in the superimposition region may achieve a gradient of transparency from 0 to 100%. For example, as shown in FIG. 9, transparency of an initial position of the visible part in the superimposition region is 0%, and transparency of an end position is 100%. Transparency corresponding to each width of the visible part may be determined based on a linear relationship between the width of the visible part in the superimposition region and a transparency interval range. In an implementation of this application, the visible part may be divided into a plurality of sub-regions having an equal width based on a preset quantity of regions, sequence numbers of the plurality of sub-regions are determined based on the quantity of the regions, and transparency corresponding to each sub-region sequence number is set. A different transparency gradient interval is set for each sub-region based on the transparency corresponding to each sub-region sequence number. The quantity of regions may be set based on actual requirements, for example, set to 10. For example, if the quantity of regions is 10, the visible part may be divided into 10 sub-regions. Based on the quantity of regions, sequence numbers of 10 sub-regions may be determined in a top-to-bottom sequence: a first sub-region, a second sub-region, a third sub-region, ..., and a tenth sub-region. Because a gradient from 0% to 100% of transparency of 10 sub-regions needs to be completed, a difference between transparency of two adjacent sub-regions may be set to 10%. For example, a transparency gradient interval of the first sub-region may be set to 0% to 10%, a transparency gradient interval of the second sub-region may be set to 11% to 20%, a transparency gradient interval of the third sub-region may be set to 21% to 30%, ..., and a transparency gradient interval of the tenth sub-region may be set to 91% to 100%.

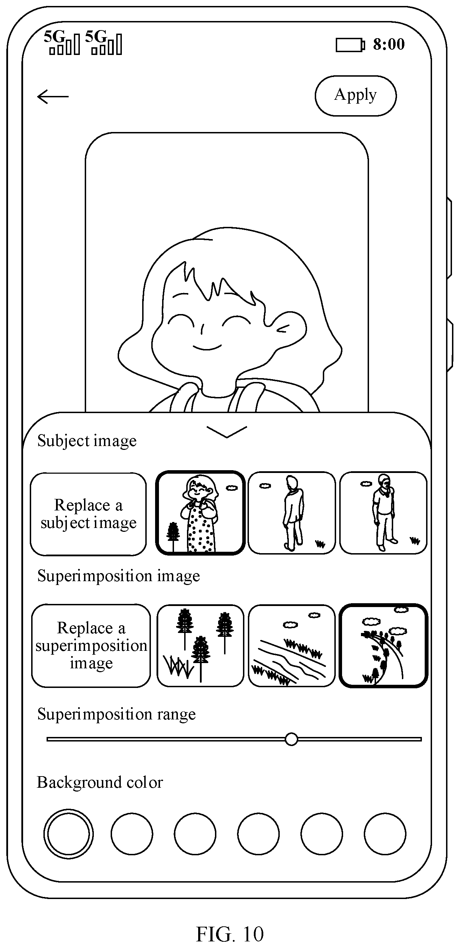

In an embodiment of this application, a drag control bar corresponding to the superimposition range may be displayed on the wallpaper preview interface. When a drag operation performed by the user on the drag control bar is received, the superimposition range may be adjusted. In another embodiment, the superimposition range may be adjusted by using a scalable rectangular box. In an implementation of this application, in response to a tap performed by the user on the target subject image, the drag control bar corresponding to the superimposition range may be displayed on the wallpaper preview interface. The drag control bar may be displayed at a preset orientation, such as above, below, to the left, or to the right, of the target subject image. In an implementation of this application, when the tap operation on the wallpaper selection control is received, the drag control bar corresponding to the superimposition range may be displayed, for example, may be displayed below the second option. FIG. 10 is a schematic diagram of a drag control bar of a superimposition range according to an embodiment of this application. For example, as shown in FIG. 10, the drag control bar corresponding to the superimposition range is displayed on the wallpaper preview interface. When a drag leftward operation performed by the user on the drag control is received, the superimposition range is reduced. When a drag rightward operation performed by the user on the drag control bar is received, the superimposition range is increased.

In an embodiment of this application, that a superimposition region whose transparency setting is completed is superimposed on the target subject image, to generate the target image includes: superimposing the superimposition region whose transparency setting is completed on the target subject image, to generate the first image; generating the second image based on a preset image size and the first image, a size of the second image being the same as the image size, and the second image including the first image; and determining a background color corresponding to the second image, and coloring a region other than the first image in the second image based on the determined background color, to obtain the target image. A position of the first image in the second image may be set based on user requirements. In an embodiment of this application, the first image is displayed in the center of the second image. In an embodiment of this application, the background color corresponding to the second image may be determined based on the main color of the target subject image (or the first image). For example, a target main color corresponding to the main color of the target subject image (or the first image) may be determined according to the preset main color matching rule, and the determined target main color is used as the background color. In an embodiment of this application, after at least one background color corresponding to the second image is determined, an option of "Background color" corresponding to the at least one background color may be displayed on the wallpaper preview interface. The option of "Background color" indicates a displayed background color. For example, as shown in (a) and (b) in FIG. 3, in response to the tap performed by the user on the wallpaper selection control, the option of "Background color" corresponding to the background color is displayed on the wallpaper preview interface. When the terminal device receives a selection operation performed by the user on any option of "Background color", the region other than the first image in the second image is colored based on a background color corresponding to the any option of "Background color", to obtain the target image. When the option of "Background color" is displayed on the wallpaper preview interface, an option of "More colors" may further be displayed. The option of "More colors" is used for selecting a background color for generating the wallpaper. If the terminal device receives a tap operation performed by the user on the option of "More colors", a target color is determined based on the operation performed by the user, and the option of "Background color" is updated based on the determined target color, so that an updated option of "Background color" includes an option corresponding to the target color. In this case, the option corresponding to the target color is in a selected state. After the target color is determined, the region other than the first image in the second image is colored based on the determined target color, to obtain the target image.

In some embodiments of this application, the generating a target image based on the target subject image and the superimposition region includes: determining a third image; and generating the target image based on the target subject image, the superimposition region, and the third image. The third image may be a solid-color picture. The target subject image, the superimposition region, and the third image are superimposed, to generate the target image. In some implementations, after the superimposition region is superimposed on the target subject image, the target subject image is superimposed on the third image, that is, based on a sequence from top to bottom, the superimposition region is a first layer, the target subject image is a second layer, and the third image is a third layer. Positions of the target subject image and the superimposition region in the third image may be set based on user requirements. In an embodiment of this application, the target subject image and the superimposition region may be set to be displayed in the center of the third image. In the foregoing embodiment, content in the target image can be enriched through superimposition on the third image, so that the generated target image is more aesthetic.

In some implementations, the determining a third image includes: determining at least one background color based on a main color of a target subject image (or an image obtained by superimposing the target subject image and the superimposition region), and displaying an option of "Background color" corresponding to each background color; and generating, when the terminal device receives a selection operation on any option of "Background color", the third image based on a background color corresponding to any option of "Background color". At least one target main color corresponding to the main color of the target subject image may be determined according to the preset main color matching rule, the determined target main color is used as the background color, and at least one option of "Background color" is generated and displayed. In an embodiment of this application, after displaying the at least one option of "Background color", the terminal device may select, by default, an option of "Background color" having a highest recommendation degree corresponding to the main color of the target subject image from the displayed at least one option of "Background color". In the foregoing embodiment, the option of "Background color" corresponding to the background color may be generated based on the main color of the target subject image (or the image obtained by superimposing the target subject image and the superimposition region), to help the user select a background color that matches the target subject image (or the image obtained by superimposing the target subject image and the superimposition region) in color, so that it is easier to generate a more aesthetic wallpaper.

In an implementation of this application, when the option of "Background color" is displayed on the wallpaper preview interface, an option of "More colors" may further be displayed. The option of "More colors" is used for selecting a background color for generating the third image. If the terminal device receives a tap operation performed by the user on the option of "More colors", a target color is determined based on the operation performed by the user, and the option of "Background color" is updated based on the determined target color, so that an updated option of "Background color" includes an option corresponding to the target color. In this case, the option corresponding to the target color in the updated option of "Background color" is in a selected state. After the target color is determined, the third image is generated based on the determined target color, where a color of the third image is the target color. According to the foregoing method, more choices of background colors may be provided for the user, interaction of the user in the wallpaper generation process is increased, and user experience is improved. In addition, the generated wallpaper can be enabled to better meet user requirements.

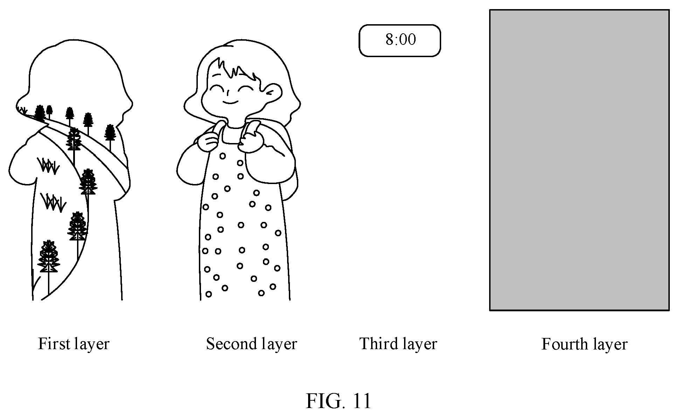

In some embodiments of this application, if the wallpaper is a screen locking wallpaper, the generating a target image based on the target subject image and the superimposition region includes: determining a third image; generating a clock layer; and generating the target image based on the target subject image, the superimposition region, the third image, and the clock layer. The clock layer is also referred to as a screen locking clock, is used for displaying current time, and may be generated by using a screen locking interface function in an operating system of the terminal device. A time format and pattern of the clock layer may be set based on user requirements. FIG. 11 is a schematic diagram of an image superimposition sequence according to an embodiment of this application. As shown in FIG. 11, superimposition is performed in a top-to-bottom sequence in which the superimposition region is the first layer, the target subject image is the second layer, the clock layer is the third layer, and the third image is a fourth layer, to obtain the target image. In an implementation of this application, a text region of the clock layer partially overlaps the target subject image, so that the target subject image covers some content in the text region of the clock layer, thereby presenting a layered feeling and creating a depth of field effect. In an embodiment of this application, a color of a text on the clock layer may be determined based on the main color of the target subject image or the main color of the image obtained by superimposing the target subject image and the superimposition region. For example, the color of the text on the clock layer may be determined according to the preset main color matching rule and the main color of the target subject image (or the image obtained by superimposing the target subject image and the superimposition region), so that the color of the text on the clock layer matches the main color of the target subject image (or the main color of the image obtained by superimposing the target subject image and the superimposition region). According to the foregoing method, because the clock layer is on the third layer, and the superimposition region and the target subject image are superimposed, a screen locking wallpaper having a transparent superimposition effect may be generated.

In an embodiment of this application, after the generating the target image based on the target subject image, the superimposition region, and the third image, the method further includes: determining, according to a preset adjustment rule, a first region corresponding to the target image; adjusting the target subject image when the terminal device receives a first operation on the first region, to obtain an adjusted target subject image; adjusting the superimposition region based on the adjusted target subject image, to obtain an adjusted superimposition region; and updating the target image based on the adjusted target subject image and the adjusted superimposition region.

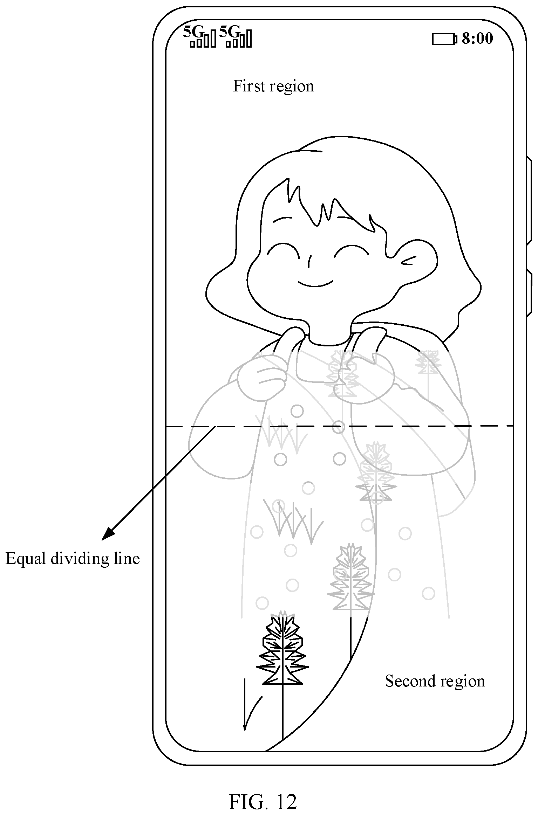

The adjustment rule may be set based on user requirements. For example, the adjustment rule may include: determining, based on a width of the target subject image, an equal dividing line of the target subject image in width, and determining a region above the equal dividing line as the first region. FIG. 12 is a schematic diagram of determining a first region according to an embodiment of this application. As shown in FIG. 12, the equal dividing line of the target subject image in width is determined, and the region above the equal dividing line is determined as the first region. The first region is a region that is in the target image and in which the target subject image is adjusted. The user may perform a corresponding action in the first region to perform an adjustment operation (that is, the first operation) on the target subject image. For example, the first operation may include: one or a combination of operations such as a zoom-in operation, a zoom-out operation, and a movement operation. The zoom-in operation is used for zooming in the target subject image, the zoom-out operation is used for zooming out the target subject image, and the movement operation is used for moving the target subject image. A gesture action corresponding to each first operation may be preset. For example, pinching with two hands corresponds to the zoom-out operation, moving two fingers away from each other corresponds to the zoom-in operation, and dragging with a long press corresponds to the movement operation. In the foregoing embodiment, a display situation of the target subject image on the target image may be adjusted based on the first operation performed by the user in the first region.

In an embodiment of this application, the obtaining an adjusted superimposition region by adjusting the superimposition region based on the adjusted target subject image includes: zooming in the superimposition region when the target subject image is zoomed in, to obtain a zoomed-in superimposition region; zooming out the superimposition region when the target subject image is zoomed out, to obtain a zoomed-out superimposition region; moving the superimposition region when the target subject image is moved, to obtain a moved superimposition region. When the size of the target subject image changes, the size of the superimposition region changes at a corresponding ratio, so that the two sizes are consistent; and when the position of the target subject image changes, the position of the superimposition region changes accordingly, so that the two positions are consistent.

In an embodiment of this application, after the generating the target image based on the target subject image, the superimposition region, and the third image, the method further includes: determining, according to the adjustment rule, a second region corresponding to the target image; adjusting the superimposition region when the terminal device receives a second operation on the second region, to obtain an adjusted superimposition region, display content of the adjusted superimposition region being different from display content of the superimposition region, and a size of the adjusted superimposition region being the same as a size of the superimposition region; and updating the target image based on the target subject image, the adjusted superimposition region, and the third image. In the foregoing embodiment, the display content of the superimposition region may be adjusted based on the second operation performed by the user in the second region.

The adjustment rule may be set based on user requirements. For example, the adjustment rule may include: determining, based on a width of the target subject image, an equal dividing line of the target subject image in width, and determining a region under the equal dividing line as the second region. For example, as shown in FIG. 12, the equal dividing line of the target subject image in width is determined, and the region under the equal dividing line is determined as the second region. The second region is a region that is in the target image and in which the superimposition region is adjusted. The user may perform a corresponding action in the second region to perform an adjustment operation (that is, the second operation) on the superimposition region. For example, the second operation may include: one or a combination of operations such as a zoom-in operation, a zoom-out operation, and a movement operation. The zoom-in operation is used for zooming in the superimposition region, the zoom-out operation is used for zooming out the superimposition region, and the movement operation is used for moving the superimposition region.

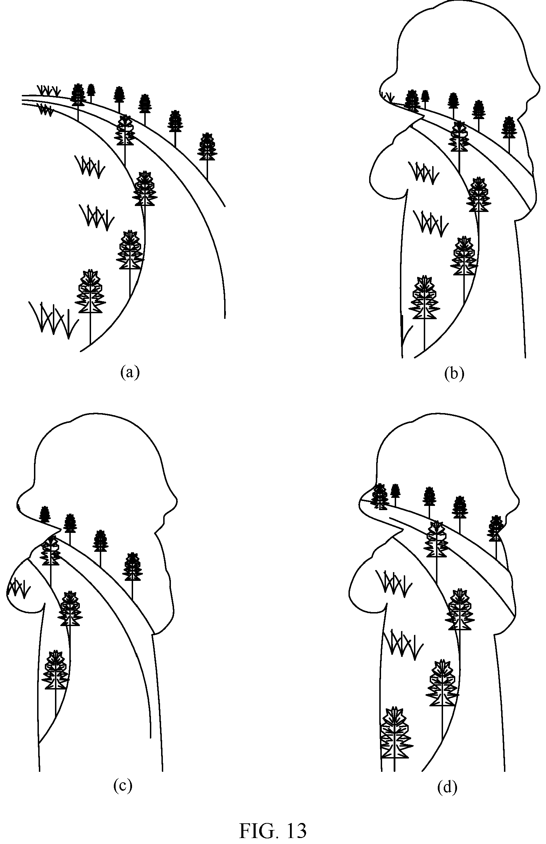

Because the superimposition region is limited in the size and the position of the target subject image, after the adjustment operation is performed on the superimposition region, the adjusted superimposition region needs to be re-determined based on the target subject image, and the target image is updated based on the target subject image, the adjusted superimposition region, and the third image. The adjusted superimposition region is still in the contour corresponding to the target subject image, and does not exceed the contour corresponding to the target subject image. A size of the superimposition region after the adjustment is the same as that of the superimposition region before the adjustment. FIG. 13 is a schematic diagram of adjusting a superimposition region based on a second operation according to an embodiment of this application. The second image is shown in (a) in FIG. 13, and an initial superimposition region initially determined based on the second image is shown in (b) in FIG. 13. If the second operation performed by the user in the second region is moving to the left, a current superimposition region shown in (c) in FIG. 13 may be obtained. As shown in (c) in FIG. 13, an image on a right side of the initial superimposition region in the second image may be seen in the current superimposition region. Because the superimposition region is limited in the size and the position of the target subject image, some content in the initial superimposition region may be invisible in the current superimposition region. If the second operation performed by the user in the second region is a zoom-in movement, the current superimposition region shown in (d) in FIG. 13 may be obtained. As shown in (d) in FIG. 13, the content displayed in the current superimposition region is equivalent to the zoomed-in content in the initial superimposition region. Because the superimposition region is limited in the size and the position of the target subject image, some content in the initial superimposition region is invisible in the current superimposition region.

In an embodiment of this application, the user determines a plurality of second images, and a plurality of superimposition regions exist. If the plurality of superimposition regions exist, the generating the target image based on the target subject image, the superimposition region, and the third image includes: determining display rankings corresponding to the plurality of superimposition regions; determining a first superimposition region in the plurality of superimposition regions based on the display rankings; and generating the target image based on the target subject image, the first superimposition region, and the third image. In an implementation of this application, the display ranking corresponding to each superimposition region may be determined based on rankings in which the user selects the plurality of second images. For example, the user selects a second image A in a first ranking, and determines that a display ranking of a superimposition region corresponding to the second image A is first; and the user selects a second image B in a fourth ranking, and determines that a display ranking of a superimposition region corresponding to the second image B is fourth. In another implementation of this application, the display rankings corresponding to the plurality of superimposition regions may be set based on ranking performed by the user. The first superimposition region is a superimposition region whose display ranking is first in the plurality of superimposition regions. In the foregoing embodiment, when the plurality of superimposition regions are determined, a superimposition region to be presented first may be determined in the plurality of superimposition regions.

Step S107: When receiving a tap operation on a wallpaper application control, the terminal device sets the target image as a wallpaper of the terminal device, and displays the wallpaper.

In this embodiment of this application, the wallpaper preview interface includes the wallpaper application control. The wallpaper application control is configured to set the wallpaper of the terminal device. In an embodiment of this application, after receiving the tap operation performed by the user on the wallpaper synthesis control, the terminal device displays the wallpaper preview interface, and the displayed wallpaper preview interface includes the wallpaper application control. For example, as shown in (b) in FIG. 3, the wallpaper preview interface displays the wallpaper application control, that is, an application control. In an implementation of this application, when the terminal device receives the tap operation performed by the user on the wallpaper application control, the terminal device sets the currently displayed image on the wallpaper preview interface as the wallpaper of the terminal device.

In an embodiment of this application, after the generated target image is displayed on the wallpaper preview interface, when the terminal device receives the tap operation performed by the user on the wallpaper application control, the terminal device sets the target image displayed on the wallpaper preview interface as the wallpaper of the terminal device.

In an embodiment of this application, after the displaying the wallpaper, the method further includes: determining, based on a preset time interval and the display rankings, a second superimposition region corresponding to current time in the plurality of superimposition regions; and obtaining and displaying an updated wallpaper by updating the wallpaper based on the second superimposition region. The time interval may be set based on user requirements, for example, 30 minutes or one hour. The time interval is used for updating the wallpaper. For example, the time interval is 30 minutes, a time for displaying the wallpaper is 13:30, and the currently displayed superimposition region in the wallpaper is a superimposition region whose display ranking is first in the plurality of superimposition regions; if it is determined that an update time of the wallpaper is reached when the current time is 14:00, a superimposition region whose display ranking is second in the plurality of superimposition regions is determined as a second superimposition region corresponding to the current time; if it is determined that the update time of the wallpaper is reached when the current time is 14:30, a superimposition region whose display ranking is third in the plurality of superimposition regions is determined as a second superimposition region corresponding to the current time; and if it is determined that the update time of the wallpaper is reached when the current time is 15:00, a superimposition region whose display ranking is fourth in the plurality of superimposition regions is determined as a second superimposition region corresponding to the current time. In the foregoing implementation, when the user selects the plurality of second images to obtain the plurality of superimposition regions, the plurality of superimposition regions are displayed in turn based on the preset time interval and the display rankings of the plurality of superimposition regions, so that the currently displayed wallpaper is updated, thereby bringing richer user experience to the user.

In an embodiment of this application, after the displaying the wallpaper, the method further includes: determining, based on the display rankings, a second superimposition region corresponding to current time in the plurality of superimposition regions when the terminal device is detected to be in a screen-locked state; and obtaining and displaying an updated wallpaper by updating the wallpaper based on the second superimposition region. The second superimposition region corresponding to the current time may be determined based on a quantity of times the terminal device enters the screen-locked state and the display ranking of the plurality of superimposition regions. For example, the superimposition region in the currently displayed wallpaper is a superimposition region whose display ranking is first in the plurality of superimposition regions. After the wallpaper is displayed, if the terminal device enters the screen-locked state for the first time, a superimposition region whose display ranking is second in the plurality of superimposition regions is determined as the second superimposition region corresponding to the current time; if the terminal device enters the screen-locked state for the second time, a superimposition region whose display ranking is third in the plurality of superimposition regions is determined as a second superimposition region corresponding to the current time; and if the terminal device enters the screen-locked state for the third time, a superimposition region whose display ranking is fourth in the plurality of superimposition regions is determined as a second superimposition region corresponding to the current time. The plurality of superimposition regions are displayed in turn based on the preset time interval and the display rankings of the plurality of superimposition regions. In the foregoing implementation, when the user selects the plurality of second images to obtain the plurality of superimposition regions, the plurality of superimposition regions may be displayed in turn based on the display rankings of the plurality of superimposition regions each time the user enters the screen-locked state, which implements updating the currently displayed wallpaper each time the user enters the screen-locked state, bringing richer user experience to the user.

In some embodiments of this application, after the displaying the wallpaper, the method further includes: determining, based on the display rankings, a second superimposition region corresponding to current time in the plurality of superimposition regions when a device scenario or a geographical region of the terminal device is detected to change; and obtaining and displaying an updated wallpaper by updating the wallpaper based on the second superimposition region. The device scenario may be set based on an actual situation, and includes a flight scenario, a attention concentration scenario, a common scenario, and the like. The geographical region of the terminal device may be determined based on a geofence. The geographical region may be set based on an actual situation, and may include, for example, a home, a company, a supermarket, a shopping mall, a subway station, or a train station. The second superimposition region corresponding to the current time may be determined based on a quantity of times that the device scenario or the geographical region of the terminal device changes. For example, the superimposition region in the currently displayed wallpaper is a superimposition region whose display ranking is first in the plurality of superimposition regions. After the wallpaper is displayed, if the device scenario or the geographical region of the terminal device changes for the first time, a superimposition region whose display ranking is second in the plurality of superimposition regions is determined as the second superimposition region corresponding to the current time; and if the device scenario or the geographical region of the terminal device changes for the second time, determined as a second superimposition region corresponding to the current time; and if the device scenario or the geographical region of the terminal device changes for the third time, a superimposition region whose display ranking is fourth in the plurality of superimposition regions is determined as a second superimposition region corresponding to the current time. In the foregoing implementation, when the user selects the plurality of second images to obtain the plurality of superimposition regions, each time the device scenario or the geographical region of the terminal device changes, the plurality of superimposition regions may be displayed in turn based on the display rankings of the plurality of superimposition regions, so that the currently displayed wallpaper is updated, thereby bringing richer user experience to the user.

In an embodiment of this application, the updating the wallpaper based on the second superimposition region includes: generating a new target image based on the target subject image, the second superimposition region, and the third image, and replacing the original target image with the newly generated target image as the wallpaper, to update the wallpaper. For some specific implementations of generating the target image based on the target subject image, the second superimposition region, and the third image, refer to related descriptions above, and details are not described herein again.

According to the wallpaper setting method provided in embodiments of this application, the first image and the second image may be determined based on selection of the user. In the wallpaper generation process, a quantity of times of human computer interaction is increased, and a sense of user participation is increased. In addition, the superimposition region is determined in the second image based on the target subject image of the first image, and the size of the superimposition region is the same as the size of the target subject image, so that the target subject image can be perfectly superimposed on the superimposition region, thereby presenting a better superimposition effect, and obtaining a more aesthetic wallpaper.

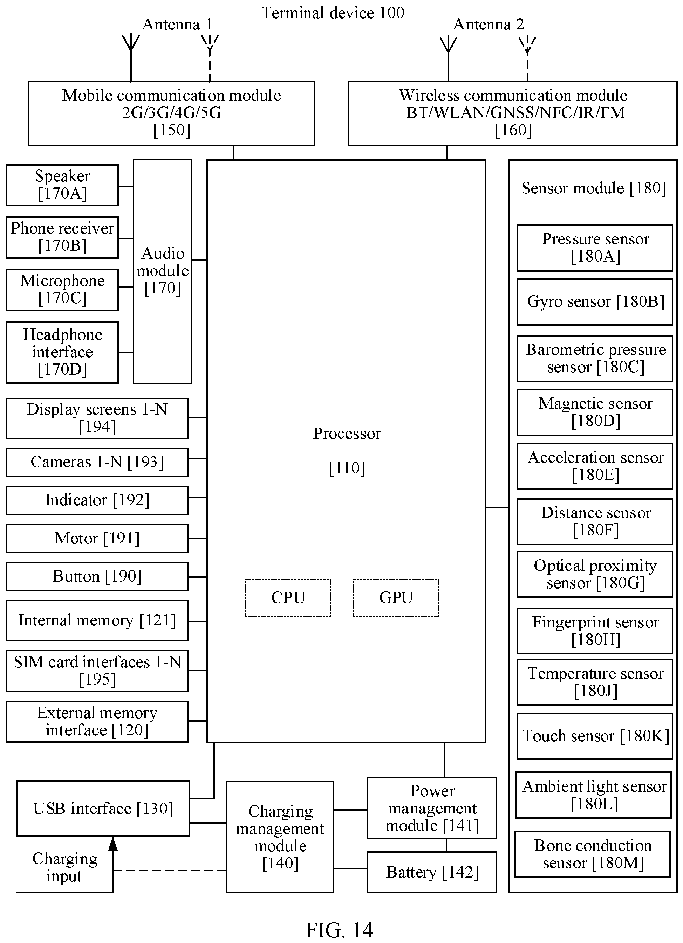

FIG. 14 is a schematic structural diagram of a terminal device 100 according to an embodiment of this application. Refer to FIG. 14. The terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a phone receiver 170B, a microphone 170C, a headphone interface 170D, a sensor module 180, a button 190, a motor 191, an indicator 192, a camera 193, a display screen 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the schematic structure in embodiments of this application does not constitute a specific limitation on the terminal device 100. In some other embodiments of this application, the terminal device 100 may include more or fewer components than those shown in the figure, or may combine some components or split some components, or have a different component arrangement. The component shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU).

A memory configured to store instructions and data may be further disposed in the processor 110. In some embodiments, the memory in the processor 110 is a cache memory. The memory can store instructions or data that the processor 110 has just used or uses cyclically. If the processor 110 is required to use the instructions or data again, the processor may directly invoke the instructions or the data from the memory. This avoids repeated access, and reduces waiting time of the processor 110, thereby improving system efficiency.

In some embodiments, the processor 110 may include one or more interfaces. The interface may include an inter-integrated circuit (inter-integrated circuit, I1C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I1C interface is a bidirectional synchronous serial bus, including a serial data line (serial data line, SDA) and a serial clock line (serial clock line, SCL). The I2S interface may be configured for audio communication. The PCM interface may also be configured for audio communication to sample, quantize, and encode an analog signal. In some embodiments, the audio module 170 and the wireless communication module 160 may be coupled by using a PCM bus interface. The UART interface is a universal serial data bus, and is configured for asynchronous communication. The bus may be a bidirectional communication bus. The bus converts to-be-transmitted data between serial communication and parallel communication. In some embodiments, the UART interface is generally configured to connect the processor 110 and the wireless communication module 160. For example, the processor 110 communicates with a Bluetooth module in the wireless communication module 160 by using the UART interface, to implement a Bluetooth function.

The MIPI interface may be configured to connect the processor 110 to a peripheral device like the display screen 194 or the camera 193. The MIPI includes a camera serial interface (camera serial interface, CSI), a display serial interface (display serial interface, DSI), and the like. In some embodiments, the processor 110 and the camera 193 communicate by using the CSI interface to implement a shooting function of the terminal device 100. The processor 110 and the display screen 194 communicate by using the DSI interface, to implement a display function of the terminal device 100.

The GPIO interface may be configured by using software. The GPIO interface may be configured as a control signal, or may be configured as a data signal. In some embodiments, the GPIO interface may be configured to connect the processor 110 and the camera 193, the display screen 194, the wireless communication module 160, the audio module 170, the sensor module 180, and the like. The GPIO interface may be further configured as the I1C interface, the I2S interface, the UART interface, the MIPI, or the like.

The USB interface 130 is an interface compliant with a USB standard specification, and may be specifically a Mini USB interface, a Micro USB interface, a USB Type C interface, or the like. The USB interface 130 may be configured to be connected to the charger to charge the terminal device 100, or may be configured to perform data transmission between the terminal device 100 and the peripheral device, and may further be configured to be connected to a headset to play audio through the headset. The interface may be further configured to be connected to another terminal device 100 like an AR device.

It can be understood that an interface connection relationship between modules illustrated in an embodiment of this application is merely a schematic description, and does not constitute a limitation on a structure of the terminal device 100. In some other embodiments of this application, the terminal device 100 may use an interface connection method different from that in the above embodiment, or use a combination of a plurality of interface connection methods.

The charge management module 140 is configured to receive charge input from the charger. The charger may be a wireless charger or a wired charger. The power management module 141 is configured to be connected to the battery 142, the charging management module 140, and the processor 110. The power management module 141 receives an input from the battery 142 and/or an input from the charging management module 140, and supplies power to the processor 110, the internal memory 121, the display screen 194, the camera 193, the wireless communication module 160, and the like. The power management module 141 may also be configured to monitor parameters such as a battery capacity, a number of battery cycles, and a battery health status (power leakage and impedance).

A wireless communication function of the terminal device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal.

The mobile communication module 150 can provide a solution for wireless communication including 2G/3G/4G/5G and the like applied to the terminal device 100. The mobile communication module 150 may include at least one filter, a switch, a power amplifier, a low noise amplifier (LNA), and the like. The mobile communication module 150 may receive an electromagnetic wave by the antenna 1, filter and amplify the received electromagnetic wave, and the like, and transmit the electromagnetic wave to the modem for demodulation. The mobile communication module 150 may also amplify a signal modulated by the modem processor, and convert the signal into an electromagnetic wave by using the antenna 1 for radiation.

The wireless communication module 160 may provide a solution applied to the terminal device 100 for wireless communication such as a wireless local area network (wireless Local area network, WLAN), Bluetooth (bluetooth, BT), a global navigation satellite system (global navigation satellite system, GNSS), frequency modulation (frequency modulation, FM), near field communication (near field communication, NFC), and an infrared (infrared, IR) technology.

The terminal device 100 implements a display function by using the GPU, the display screen 194, the application processor, and the like. The GPU is a microprocessor for serving abnormal reminding, and is connected to the display screen 194 and the application processor. The GPU is configured to conduct mathematical and geometric computation, and is configured to render graphics. The processor 110 may include one or more GPUs and execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini LED, a micro LED, a micro OLED, a quantum dot light emitting diode (quantum dot light emitting diode, QLED), or the like.

In some embodiments, the terminal device 100 may include 1 or N display screens 194. N is a positive integer greater than 1. The terminal device 100 can implement a photographing function by using the ISP, the camera 193, the video codec, the GPU, the display screen 194, the application processor, and the like.

The camera 193 is configured to capture a static image or a video. An optical image is generated for an object by using a lens and is projected onto the photosensitive element.

The internal memory 121 may include one or more random access memories (random access memories, RAMs) and one or more non-volatile memories (non-volatile memories, NVMs).

The external memory interface 120 may be configured to connect to an external non-volatile memory, to extend a storage capability of the terminal device 100. The external non-volatile memory communicates with the processor 110 by using the external memory interface 120, to implement a data storage function. For example, a file such as music or a video is stored in the external non-volatile memory.

The terminal device 100 can implement an audio function by using the audio module 170, the speaker 170A, the phone receiver 170B, the microphone 170C, the headset interface 170D, the application processor, and the like. For example, music playing and sound recording are implemented.

The audio module 170 is configured to convert digital audio information into an analog audio signal for output, and convert an analog audio input into a digital audio signal. The audio module 170 may alternatively be configured to encode and decode an audio signal.

The speaker 170A, also referred to as "horn", is configured to convert an electrical audio signal into a sound signal. Music can be listened to or a hands-free call can be answered by using the speaker 170A in the terminal device 100. The phone receiver 170B, also referred to as "earpiece", is configured to convert an electrical audio signal into a sound signal. When a call is answered or audio information is listened to by using the terminal device 100, the phone receiver 170B may be put close to a human ear to listen to a voice. The microphone 170C, also referred to as "microphone" or "mic", is configured to convert a sound signal into an electrical signal. When making a call or sending a voice message, a user can speak close to the microphone 170C with the human mouth to input the sound signal to the microphone 170C. At least one microphone 170C may be arranged in the terminal device 100. In some other embodiments, two microphones 170C may be disposed in the terminal device 100, to collect a sound signal and further implement a noise reduction function. In some other embodiments, alternatively, three, four, or more microphones 170C may be disposed in the terminal device 100, to collect a sound signal, reduce noise, and further identify a sound source, implement a directional recording function, and the like.

The headset interface 170D is configured to connect to a wired headset. The headset interface 170D may be a USB interface 130, or may be a 3.5 mm open mobile terminal 100 platform (open mobile terminal platform, OMTP) standard interface or a cellular telecommunication industry association of the USA (cellular telecommunication industry association of the USA, CTIA) standard interface.

The pressure sensor 180A is configured to sense a pressure signal, and can convert the pressure signal into an electrical signal. The gyro sensor 180B may be configured to determine a motion gesture of the terminal device 100. A barometric pressure sensor 180C is configured to measure barometric pressure. The magnetic sensor 180D includes a Hall effect sensor. The terminal device 100 may detect opening and closing of a flip leather case by using the magnetic sensor 180D. The acceleration sensor 180E may detect a magnitude of acceleration of the terminal device 100 in each direction (generally on three axes). The distance sensor 180F is configured to measure a distance. The optical proximity sensor 180G may include a light-emitting diode (LED) and an optical detector, for example, a photodiode. The ambient light sensor 180L is configured to perceive ambient light brightness. A fingerprint sensor 180H is configured to collect a fingerprint. A temperature sensor 180J is configured to detect a temperature. The touch sensor 180K is also referred to as a "touch component". The touch sensor 180K may be disposed on the display screen 194. The touch sensor 180K and the display screen 194 form a touchscreen, also referred to as a "touch control screen". A bone conduction sensor 180M may obtain a vibration signal.

The button 190 includes a power button, a volume button, and the like. The button 190 may be a mechanical button or a touch button. The motor 191 may generate a vibrating alert. The indicator 192 may be an indicator light that may be configured to indicate a charging state and a power change, or may be configured to indicate a message, a missed call, a notification, and the like.

The SIM card interface 195 is configured to connect to an SIM card. The SIM card may be inserted into the SIM card interface 195 or plugged from the SIM card interface 195 to come into contact with or be separated from the terminal device 100. The terminal device 100 can support one or N SIM card interfaces, where N is a positive integer greater than 1. The SIM card interface 195 can support a Nano SIM card, a Micro SIM card, a SIM card, and the like. A plurality of frame cards may be simultaneously inserted into the same SIM card interface 195. Types of the plurality of frame cards may be the same or different. The SIM card interface 195 is further compatible with different types of SIM cards. The SIM card interface 195 is also compatible with an external memory card. The terminal device 100 interacts with a network by using the SIM card, to implement a call function, a data communication function, and the like. In some embodiments, the electronic device 100 uses an eSIM, that is, an embedded SIM card. The eSIM card may be embedded in the terminal device 100, and cannot be separated from the terminal device 100.

This embodiment further provides a computer storage medium. The computer storage medium stores computer instructions. When the computer instructions run on the terminal device 100, the terminal device 100 performs the foregoing related method steps to implement the wallpaper setting method in the foregoing embodiments.

This embodiment further provides a computer program product. When the computer program product runs on a computer, the computer performs the foregoing related steps, to implement the wallpaper setting method in the foregoing embodiments.

In addition, an embodiment of this application further provides an apparatus. The apparatus may be specifically a chip, a component, or a module. The apparatus may include a processor and a memory that are connected to each other. The memory is configured to store computer executable instructions. When the apparatus is run, the processor may execute the computer executable instructions stored in the memory, so that the chip performs the wallpaper setting method in the foregoing method embodiments.

The terminal device, the computer storage medium, the computer program product, or the chip provided in this embodiment are all configured to perform the corresponding methods provided above. Therefore, for beneficial effects that can be achieved by the terminal device, the computer storage medium, the computer program product, or the chip, refer to beneficial effects in the corresponding methods provided above, and details are not described herein again. A person skilled in the art may clearly learn from the foregoing descriptions of the implementations that, for convenience and brevity of description, division into the foregoing functional modules is only used as an example for description. During actual application, the foregoing functions may be allocated to different functional modules for implementation based on a requirement, that is, an inner structure of an apparatus is divided into different functional modules, to complete all or some of the functions described above.

In a plurality of embodiments provided in this application, it should be understood that the disclosed apparatus and method may be implemented in other manners. For example, the apparatus embodiment described above is merely an example. For example, the division of module or unit is merely a logical function division and may be other division manners during actual implementation. For example, a plurality of units or components may be combined or integrated into another apparatus, or some features may be ignored or not performed. In addition, the displayed or discussed mutual coupling or direct coupling or communication connection may be implemented through some interfaces. Indirect coupling or communication connection between the apparatuses or units may be implemented in electronic, mechanical, or other forms. The units described as separate components may or may not be physically separate, and components displayed as units may be one or more physical units, may be located in one place, or may be distributed in a plurality of different places. A part of or all of the units may be selected based on actual needs to achieve the objectives of the solutions of embodiments.

In addition, all the functional units in all embodiments of this application may be integrated into one processing unit, or each of the units may be physically separated, or two or more units may be integrated into one unit. The foregoing integrated unit may be implemented in a form of hardware, or may be implemented in a form of a software function unit. When the integrated unit is implemented in a form of a software functional unit and sold or used as an independent product, the integrated unit may be stored in a readable storage medium. Based on such an understanding, the technical solutions in embodiments of this application essentially, or the part contributing to the conventional technologies, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. However, the foregoing storage medium includes: any medium that can store program codes, such as a USB flash disk, a mobile hard disk, a read-only memory (Read-Only Memory, ROM), a random access memory (Random Access Memory, RAM), a magnetic disk, or an optical disc.

Finally, it should be noted that the foregoing embodiments are merely intended for describing the technical solutions of this application, but not for limiting this application. Although this application is described in detail with reference to preferred embodiments, persons of ordinary skill in the art should understand that modifications or equivalent replacements may be made to the technical solutions of this application without departing from the spirit and scope of the technical solutions of this application.

## Claims

1. A wallpaper setting method, applied to a terminal device, the terminal device comprising a display screen, and the method comprising:
displaying a wallpaper preview interface on the display screen in response to a tap operation on a wallpaper synthesis control, the wallpaper preview interface comprising a wallpaper selection control and a wallpaper application control;
displaying a first option and a second option in response to a received tap operation on the wallpaper selection control;
determining a first image in response to a received selection operation on the first option; obtaining a target subject image by performing subject extraction on the first image, and displaying the target subject image on the wallpaper preview interface;
determining a second image in response to a received selection operation on the second option; determining a superimposition region in the second image based on the target subject image, a size of the superimposition region being the same as a size of the target subject image; and generating a target image based on the target subject image and the superimposition region, and displaying the target image; and
setting the target image as a wallpaper of the terminal device in response to a received tap operation on the wallpaper application control, and displaying the wallpaper.

2. The wallpaper setting method according to claim 1, wherein after the determining a first image in response to a received selection operation on the first option, the method comprises:
determining at least one superimposition recommendation image based on the first image, and updating the second option based on the at least one superimposition recommendation image.

3. The wallpaper setting method according to claim 2, wherein the determining at least one superimposition recommendation image based on the first image comprises:
performing retrieval in a first gallery based on a main color of the first image, and determining a picture in the first gallery that matches the main color as the superimposition recommendation image.

4. The wallpaper setting method according to claim 2, wherein the determining at least one superimposition recommendation image based on the first image further comprises:
performing retrieval in a second gallery based on photographing information of the first image, and determining a picture in the second gallery that matches the photographing information as the superimposition recommendation image.

5. The wallpaper setting method according to any one of claims 1 to 4, wherein the generating a target image based on the target subject image and the superimposition region comprises:
determining a third image; and
generating the target image based on the target subject image, the superimposition region, and the third image.

6. The wallpaper setting method according to claim 5, wherein the determining a third image comprises:
determining at least one background color based on the main color of the first image, and displaying a background color option corresponding to each of the at least one background color; and
generating, in response to a selection operation on any background color option, the third image based on a background color corresponding to the any background color option.

7. The wallpaper setting method according to claim 5, wherein after the generating the target image based on the target subject image, the superimposition region, and the third image, the method further comprises:
determining, according to a preset adjustment rule, a first region corresponding to the target image;
adjusting the target subject image if the terminal device receives a first operation on the first region;
adjusting the superimposition region based on an adjusted target subject image; and
updating the target image based on the adjusted target subject image, an adjusted superimposition region, and the third image.

8. The wallpaper setting method according to claim 7, wherein the first operation is one of or a combination of more of the following operations: a zoom-in operation, a zoom-out operation, and a movement operation.

9. The wallpaper setting method according to claim 7, wherein after the generating the target image based on the target subject image, the superimposition region, and the third image, the method further comprises:
determining, according to the adjustment rule, a second region corresponding to the target image;
adjusting the superimposition region if the terminal device receives a second operation on the second region, display content of an adjusted superimposition region being different from display content of the superimposition region, and a size of the adjusted superimposition region being the same as a size of the superimposition region; and
updating the target image based on the target subject image, the adjusted superimposition region, and the third image.

10. The wallpaper setting method according to claim 9, wherein the second operation is one of or a combination of more of the following operations: a zoom-in operation, a zoom-out operation, and a movement operation.

11. The wallpaper setting method according to claim 5, wherein when a plurality of superimposition regions exist, the generating the target image based on the target subject image, the superimposition region, and the third image comprises:
determining display rankings corresponding to the plurality of superimposition regions;
determining a first superimposition region in the plurality of superimposition regions based on the display rankings; and
generating the target image based on the target subject image, the first superimposition region, and the third image.

12. The wallpaper setting method according to claim 11, wherein after the displaying the wallpaper, the method further comprises:
determining, based on a preset time interval and the display rankings, a second superimposition region corresponding to current time in the plurality of superimposition regions; and
obtaining and displaying an updated wallpaper by updating the wallpaper based on the second superimposition region.

13. The wallpaper setting method according to claim 11, wherein after the displaying the wallpaper, the method further comprises:
determining, based on the display rankings, a second superimposition region corresponding to current time in the plurality of superimposition regions if the terminal device is detected to be in a screen-locked state; and
obtaining and displaying an updated wallpaper by updating the wallpaper based on the second superimposition region.

14. A computer-readable storage medium, comprising computer instructions, wherein the computer instructions, when run on a terminal device, enable the terminal device to perform the wallpaper setting method according to any one of claims 1 to 13.

15. A terminal device, comprising a processor and a memory, the memory being configured to store instructions, and the processor being configured to invoke the instructions in the memory, to enable the terminal device to perform the wallpaper setting method according to any one of claims 1 to 13.
